# EUROPEAN PATENT SPECIFICATION

(11) **EP 2 957 457 B1**
(45) Date of publication and mention of the grant of the patent: **22.04.2020**
(21) Application number: 14173011.9
(22) Date of filing: 18.06.2014
(51) Int. Cl.: B60N 2/30, B60R 19/48

(54) **Foldable seating structure**
Faltbare Sitzstruktur
Structure de siège pliable

(43) Date of publication of application: 23.12.2015
(73) Proprietor: Volvo Car Corporation, 40531 Göteborg (SE)
(72) Inventor: Olsson, Erja, 44455 Stenungsund (SE)
(74) Representative: Valea AB

(56) References cited:
- FR-A1- 2 967 103
- US-B1- 7 201 424

## Description

### Technical field

The present invention relates generally to a rear bumper for a vehicle, which rear bumper comprises a foldable seating structure. The present invention also relates to a vehicle comprising the rear bumper.

### Background art

When using a family vehicle for different activities e.g. watching a view or sports events, changing shoes, rest one's legs etc. a comfortable seating is desirable. For these purposes it is well known to open a door of a vehicle luggage compartment and use the rear bumper and a part of a loading area in the vicinity of the rear bumper as a seating. As is well known, this type of seating is rather uncomfortable since it is quite hard and it also lacks support of a back rest.

It is also known to provide an estate vehicle with integrated seating in a loading area of a loading compartment. The seating comprises a seat which in a rest position constitutes a part of the loading area of the luggage compartment. The seat is pivotally attached to the vehicle in the vicinity of a rear bumper. Thus, in a use position, the seat is folded backwards towards the rear bumper and out of the stored position in the loading area, and form a seat. A drawback with this solution is that goods that are transported in the luggage compartment must be removed before the seat may be used, which is rather unpractical.

It is also known pick-up vehicles comprising a tailgate which is provided with a stuffed seating. The seating comprises a back and a seat which in a folded position are folded to lie close together. In a stored position the back and seat are substantially vertical and stored together with the tailgate. In a used position the tailgate is unfolded and the back of the seat is in an upright position and the seat is in a substantially horizontal position together with the unfolded hatchback. The drawback with this tailgate solution is that it occupies valuable storage area in the flatbed of the pick-up and that it is not compatible with the design of an estate or coupé vehicle.

Patent document US 7201424 B1 discloses, according to the abstract, a seating accessory for use in combination with the inside surface of the tailgate of a pickup truck. The accessory includes a generally rectangular sheet sized to be positioned over the lowered tailgate surface and defining two side-by-side upwardly opening concave seating surfaces to accommodate side-by-side seated persons. Furthermore, according to the abstract, a backrest is associated with each seating surface and is pivotally moveable between an upright position providing back support for a person sitting on the respective seating surface, and a lowered, stowed position within the concavity of the respective seating surface. The seating access is secured to the tailgate using suitable fasteners coacting with the tailgate.

### Summary of invention

An object of the present invention is to provide a foldable seating structure that in a stored mode is hidden and stored in the vehicle structure and that in a simple way may be activated without the need to remove transported items from a luggage compartment before the foldable seating structure may be unfolded to seating mode. Another object of the present invention is to provide a foldable seating structure which does not occupy any valuable storage area in the luggage compartment and does not affect the crash structure of the vehicle.

The object above may be achieved by a rear bumper according to claim 1, which rear bumper comprises a foldable seating structure.

The foldable seating structure is provided in a rear end of a vehicle, which rear end comprises a rear bumper, a luggage compartment and a luggage opening of the luggage compartment. The foldable seating is movable between a stored mode and a seating mode and forms part of the rear bumper. The foldable seating structure comprises at least a back rest structure and at least a seat bottom structure, which back rest structure and seat bottom structure in the seating mode are provided in the luggage opening of the luggage compartment. In a stored mode the back rest structure and the seat bottom structure are stored in an internal space of the rear bumper.

The back rest structure and the seat bottom structure are stored in an upright position in the rear bumper in the stored mode, this to not occupy any valuable storage area within the luggage compartment and to simplify the unfolding.

The back rest structure is positioned in an upright position and the seat bottom structure is positioned in a substantially horizontal position in the seating mode, this to form a seating with a backrest.

The back rest structure and the seat bottom structure in the unfolding mode and loading mode and the seat bottom structure in the seating mode are arrested by means of a transverse strut.

The back rest structure and the seat bottom structure are provided with padded cushions and thus provide the user with a comfortable seating.

The back rest structure and the seat bottom structure are pivotally connected to each other.

The back rest structure and the seat bottom structures are pivotally attached to an original crash structure and/or towing structure of the vehicle. Thus the foldable seating structure a firmly attached to the vehicle.

The foldable seating structure comprises an luggage compartment floor board, which forms an enlarged luggage area in the luggage compartment in the loading mode and abuts a back surface of the back rest structure in the stored mode. The abutment of the luggage compartment floor board to a back surface of the back rest structure floor enable storing of the complete foldable seating structure in the internal space of the rear bumper in a storage mode.

The luggage compartment floor board is pivotally attached to the back rest structure. The luggage compartment floor board is provided to arrest the seat back structure in the seating mode, this to prevent the back rest structure to collapse when a user rests his back against it.

The luggage compartment floor board is provided with at least one arresting edge which is arranged to abut against at least one arresting surface provided on a luggage compartment floor.

### Brief description of drawings

The invention will be described in detail with reference to the attached figures. It is to be understood that the drawings are designed solely for the purpose of illustration and are not intended as a definition of the limits of the invention, for which reference should be made to the appended claims. It should further be understood that the drawings are intended to schematically illustrate the structures described herein. The invention is now described, by way of example, with reference to the accompanying drawings, in which:
Fig. 1 shows an isometric view of the foldable seating structure, according to the invention, in a stored mode,
Fig. 2 shows an isometric view of the foldable seating structure, according to the invention, in an unfolding mode,
Fig. 3 shows an isometric view of the foldable seating structure, according to the invention, in the unfolding mode,
Fig. 4 shows an isometric view of the foldable seating structure, according to the invention, in a loading mode,
Fig. 5 shows an isometric view of the foldable seating structure, according to the invention, in a seating mode,

### Description of embodiments

In the description below, various directions will be given with reference to a foldable seating structure provided in a rear end of a vehicle. Example of such directions can be forward, rear, up, down etc.

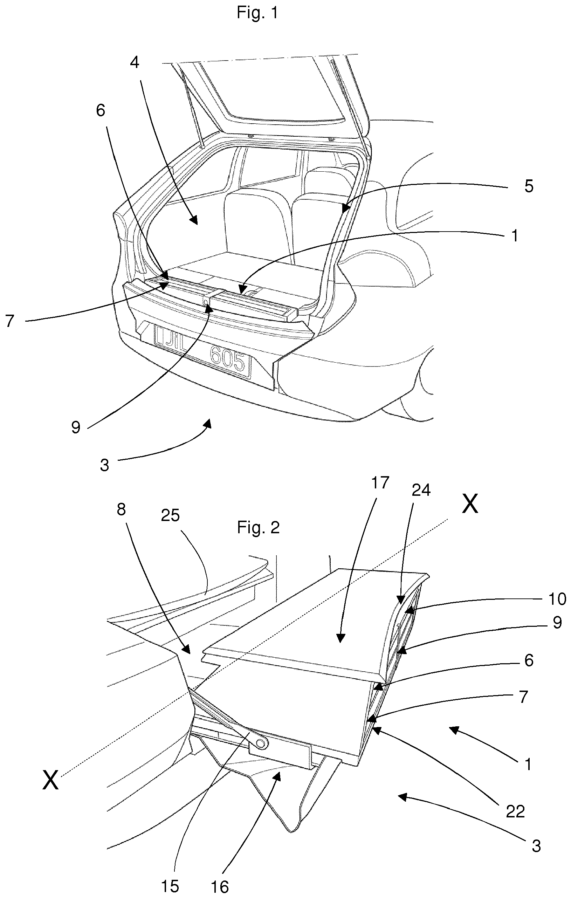

In the following, a detailed description of the foldable seating structure 1 will be given. Fig. 1 shows an isometric view of the foldable seating structure 1, according to the invention, in a storage mode. The foldable seating structure 1 is provided in a rear end 2 of a vehicle, which rear end 2 comprises a rear bumper 3, a luggage compartment 4 and a luggage opening 5 of the luggage compartment 4.

The foldable seating structure 1 is in a storage mode, stored in a space 8 within the rear bumper 3 of the vehicle and may also be covered by an aesthetic housing (not shown). The attachment of the foldable seating structure 1 does not in any way affect the crash safety or the towing safety of the vehicle, this since the foldable seating structure 1 is positioned and stored above a original crash beam structure and an original towing beam structure (not shown). The foldable seating structure 1 is attached to the rear crash structure and/or the towing structure of the vehicle (not shown), without affecting their mechanical strength.

The foldable seating structure 1 comprises at least one back rest structure 6 and at least one seat bottom structure 7. The foldable seating structure 1 may accommodate at least one person. The back rest structure 6 and the seat bottom structure 7 are stored in an internal space 8 of the rear bumper 3 of the vehicle in the stored mode. In the stored mode, the back rest structure 6 and the seating structure 7 are substantially parallel to each other and they are stored in a substantially upright position in an internal space 8 of the rear bumper 3. In the stored mode the back rest structure 6 and the seating structure 7 extend in a substantial vertical direction.

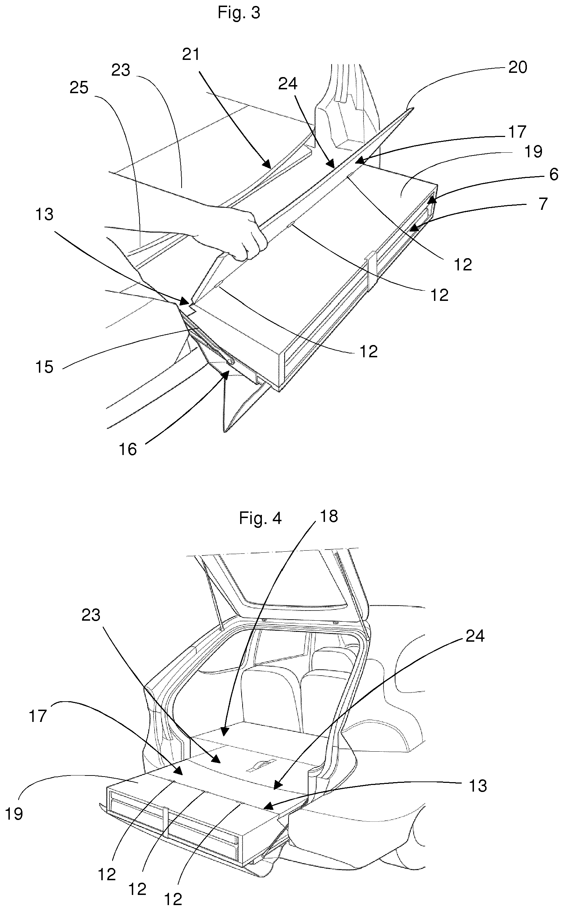

In the stored mode, the back rest structure 6 and the seat bottom structure 7 are locked in relation to each other with a lock means 9. In the simplest version the lock means 9 constitutes a strap with a push button, but any other suitable lock means may also be used. This lock means 9 is preferably provided on transversal free edges 10, 22 of the back rest structure 6 and the seating structure 7 in a stored mode. The strap with one part of the push button may for example be attached to the back rest structure 6, and the other part of the push button to the seating structure 7, or vice versa. This to facilitate unfolding of the foldable seating structure 1 in one piece, between the stored mode, Fig. 1, and the unfolding mode, Fig. 2 and Fig. 3.

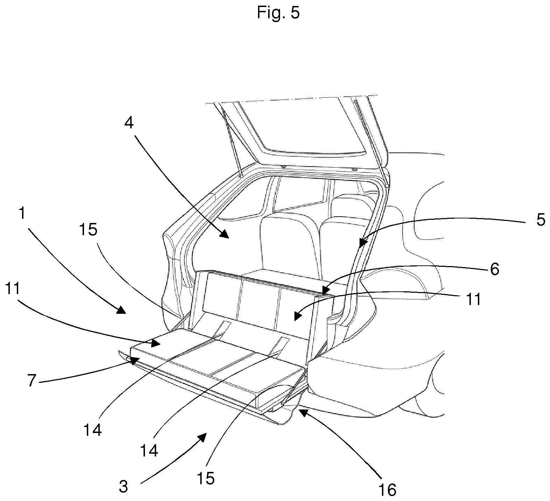

Fig. 5 shows an isometric view of the foldable seating structure 1, according to the invention, in a seating mode. In the seating mode, the back rest structure 6 is positioned in an upright position and the seat bottom structure 7 is positioned in a substantially horizontal position.

Both the back rest structure 6 and the seating structure 7 are provided with upholstered cushions11, to provide a seating comfort to the user. The upholstered cushions 11 may cover the whole or part of the seating and back rest area that is directed towards a user in the seating mode.

The back rest structure 6 and the seating structure 7 are pivotally attached to each other by means of e.g. one or more hinge elements 12. The hinge elements 12 are provided on transversal edges 13 of the back rest structure 6 and the seating structure 7. The back rest structure 6 and the seating structure 7 are attached to the vehicle by means of one or more link arms 14. The link arms 14 are attached to the beam structure of the vehicle, preferably the crash structure and/or the towing structure of the vehicle. The link arms 14 are provided in the area of the transversal edges 13 of the back rest structure 6 and the seating structure 7.

In the seating mode, the seat bottom structure 7 is arrested by means of at least one transverse strut 15. The transverse strut 15 is located on at least one side edge 16. The transverse strut 15 is provided with one end on the back rest structure 6 and one end on the rear bumper structure 3.

Fig. 2 shows an isometric view of the foldable seating structure 1, according to the invention, in an unfolding mode. The foldable seating structure 1 comprises a luggage compartment floor board 17, which may form an enlarged luggage area 18 in the luggage compartment 4. The luggage compartment floor board 17 is arranged to abut against a back surface 19 of the back rest structure 6 in the stored mode and in the unfolding mode.

The luggage compartment floor board 17 is pivotally attached to the back rest structure 6, and form together with the back rest structure 6 in a loading mode, the enlarged flat luggage floor 18. The enlarged luggage floor 18 may be desired when transporting long and bulky objects. The luggage compartment floor board 17 is in one embodiment provided to arrest the back rest structure 6 in a seating mode.

The luggage compartment floor board 17 is provided with at least one arresting edge 20 which is arranged to abut against at least one arresting surface 21 provided on a luggage compartment floor 23. The arresting edge 20 is a transversal edge provided on a free end 24 of the luggage compartment floor board17. The arresting surface 21 may preferably be angled, this to provide a self-locking effect, when the arresting edge 20 is abutting against the arresting surface 21 both in the loading mode and seating mode.

In the unfolding mode, shown in Fig. 2 and Fig. 3, the luggage compartment floor board 17 is provided against a back surface 19 of the back rest structure 6. The arresting edge 20 of the luggage compartment floor board 17 may be provided with a curvature that corresponds to a curvature on the luggage compartment floor 23, this to create an extended integrated luggage floor in one piece, as shown in Fig. 4. The extended integrated luggage floor is substantially flat.

To transform the foldable seating structure from a storage mode, Fig. 1, to the seating mode, Fig. 5, the whole foldable seating structure 1 is to be turned around an imaginary pivot axis X, which is substantially transverse and horizontal. The foldable seating structure 1 is pivoted from the stored mode, shown in Fig. 1, to the unfolding mode shown in Fig. 2 and Fig. 3. Thus the back rest structure 6, the seat bottom structure 7 and the luggage compartment floor board 17 are moved in one piece from a substantially vertical position to a substantially horizontal position. In the unfolding mode the luggage compartment floor board 17 abuts against the back side 19 of the back rest structure 6. To transform the foldable seating structure 1 from the unfolding mode to the loading mode, the luggage compartment floor board 17 is pivoted around a substantial horizontal axis. The luggage compartment floor board 17 is angled approximately 180°, from a position abutting against the back side 19 of the back rest structure 6 to a position where the arresting edge 20 of the luggage compartment floor board 17 abuts against an edge 25 of the luggage compartment floor 23. Thus, the loading mode according to Fig. 4 is reached.

Thus, to transform the foldable seating structure from the loading mode to the seating mode, the back rest structure 1 is pivoted around the substantial horizontal axis to the upright position, shown in Fig. 5.

## Claims

1. A rear bumper (3) for a vehicle, said rear bumper (3) comprising a foldable seating structure (1), wherein the foldable seating structure (1) is movable between a stored mode and a seating mode and forms part of the rear bumper (3), the foldable seating structure comprising at least a back rest structure (6) and at least a seat bottom structure (7), which back rest structure (6) and seat bottom structure (7) in the seating mode are adapted to be provided in a luggage opening (5) of a luggage compartment (4) of the vehicle, wherein the back rest structure (6) and the seat bottom structure (7) are stored in an internal space (8) of the rear bumper (3) of the vehicle in the stored mode.

2. The rear bumper according to claim 1, wherein the back rest structure (6) and the seat bottom structure (7) are stored in an upright position in the rear bumper (3) in the stored mode.

3. The rear bumper according to claim 1 or 2, wherein the back rest structure (6) is positioned in an upright position and the seat bottom structure (7) is positioned in a substantially horizontal position in the seating mode.

4. The rear bumper according to any of claims 1-3, wherein the back rest structure (6) and the seat bottom structure (7) in an unfolding mode and a loading mode and the seat bottom structure (7) in the seating mode are arrested by means of a transverse strut (15).

5. The rear bumper according to claim 4, wherein the seat bottom structure (7) in the seating mode is arrested by means of at least one transverse strut (15), the transverse strut (15) being located on at least one side edge (16) and being provided with one end on the back rest structure (6) and one end on the rear bumper structure (3).

6. The rear bumper according to any of claims 1-5, wherein the back rest structure (6) and the seat bottom structure (7) are provided with padded cushions (11).

7. The rear bumper according to any of claims 1-6, wherein the back rest structure (6) and the seat bottom structure (7) are pivotally connected to each other.

8. The rear bumper according to any of claims 1-7, wherein the foldable seating structure comprises a luggage compartment floor board (17), which is arranged to form part of an enlarged luggage area (18) in the luggage compartment in the loading mode and to abut against a back surface (19) of the back rest structure (6) in the stored mode.

9. The rear bumper according to claim 8, wherein the luggage compartment floor board (17) is pivotally attached to the back rest structure (6).

10. The rear bumper according to claims 8 or 9, wherein the luggage compartment floor board (17) is provided to arrest the back rest structure (6) in the seating mode.

11. A vehicle comprising a rear end (2), which rear end (2) comprises a luggage compartment (4), a luggage opening (5) of the luggage compartment (4) and a rear bumper (3) according to any one of claims 1 to 10.

12. The vehicle according to claim 11, wherein the foldable seating structure (1) is attached to an original crash structure and/or towing structure of the vehicle.

13. The vehicle according to claim 11 or 12, wherein the foldable seating structure (1) comprises a luggage compartment floor board (17) which is provided with at least one arresting edge (20) which is arranged to abut against at least one arresting surface (21) provided on a luggage compartment floor (23) of the vehicle.

## Patentansprüche

1. Hintere Stoßstange (3) für ein Fahrzeug, wobei die hintere Stoßstange (3) eine klappbare Sitzstruktur (1) umfasst, wobei die klappbare Sitzstruktur (1) zwischen einem verstauten Modus und einem Sitzmodus bewegbar ist und Teil der hinteren Stoßstange (3) bildet, wobei die klappbare Sitzstruktur wenigstens eine Rückenlehnenstruktur (6) und wenigstens eine Sitzbodenstruktur (7) umfasst, wobei die Rückenlehnenstruktur (6) und die Sitzbodenstruktur (7) in dem Sitzmodus geeignet sind, in einer Gepäcköffnung (5) eines Kofferraums (4) des Fahrzeugs bereitgestellt zu sein, wobei die Rückenlehnenstruktur (6) und die Sitzbodenstruktur (7) in dem verstauten Modus in einem Innenraum (8) der hinteren Stoßstange (3) des Fahrzeugs verstaut sind.

2. Hintere Stoßstange nach Anspruch 1, wobei die Rückenlehnenstruktur (6) und die Sitzbodenstruktur (7) in dem verstauten Modus in einer aufrechten Stellung in der hinteren Stoßstange (3) verstaut sind.

3. Hintere Stoßstange nach Anspruch 1 oder 2, wobei in dem Sitzmodus sich die Rückenlehnenstruktur (6) in einer aufrechten Stellung befindet und sich die Sitzbodenstruktur (7) in einer im Wesentlichen horizontalen Stellung befindet.

4. Hintere Stoßstange nach einem der Ansprüche 1 bis 3, wobei die Rückenlehnenstruktur (6) und die Sitzbodenstruktur (7) in einem Aufklappmodus und einem Lademodus und die Sitzbodenstruktur (7) in dem Sitzmodus mittels einer Querstrebe (15) arretiert sind.

5. Hintere Stoßstange nach Anspruch 4, wobei die Sitzbodenstruktur (7) in dem Sitzmodus mittels wenigstens einer Querstrebe (15) arretiert ist, wobei sich die Querstrebe (15) an wenigstens einem Seitenrand (16) befindet und mit einem Ende an der Rückenlehnenstruktur (6) und einem Ende an der hinteren Stoßstangenstruktur (3) bereitgestellt ist.

6. Hintere Stoßstange nach einem der Ansprüche 1 bis 5, wobei die Rückenlehnenstruktur (6) und die Sitzbodenstruktur (7) mit gepolsterten Kissen (11) versehen sind.

7. Hintere Stoßstange nach einem der Ansprüche 1 bis 6, wobei die Rückenlehnenstruktur (6) und die Sitzbodenstruktur (7) auf drehbare Weise miteinander verbunden sind.

8. Hintere Stoßstange nach einem der Ansprüche 1 bis 7, wobei die klappbare Sitzstruktur ein Kofferraumbodenbrett (17) umfasst, das so angeordnet ist, dass es in dem Lademodus Teil eines vergrößerten Gepäckbereichs (18) in dem Kofferraum bildet und in dem verstauten Modus an einer rückwärtigen Fläche (19) der Rückenlehnenstruktur (6) anliegt.

9. Hintere Stoßstange nach Anspruch 8, wobei das Kofferraumbodenbrett (17) auf drehbare Weise an der Rückenlehnenstruktur (6) angebracht ist.

10. Hintere Stoßstange nach Anspruch 8 oder 9, wobei das Kofferraumbodenbrett (17) so bereitgestellt ist, dass es die Rückenlehnenstruktur (6) in dem Sitzmodus arretiert.

11. Fahrzeug, umfassend ein hinteres Ende (2), wobei das hintere Ende (2) einen Kofferraum (4), eine Gepäcköffnung (5) des Kofferraums (4) und eine hintere Stoßstange (3) nach einem der Ansprüche 1 bis 10 umfasst.

12. Fahrzeug nach Anspruch 11, wobei die klappbare Sitzstruktur (1) an einer ursprünglichen Stoßstruktur und/oder Abschleppstruktur des Fahrzeugs angebracht ist.

13. Fahrzeug nach Anspruch 11 oder 12, wobei die klappbare Sitzstruktur (1) ein Kofferraumbodenbrett (17) umfasst, das mit wenigstens einem Arretierrand (20) versehen ist, der so angeordnet ist, dass er an wenigstens einer Arretierfläche (21) anliegt, die auf einem Kofferraumboden (23) des Fahrzeugs bereitgestellt ist.

## Revendications

1. Pare-chocs arrière (3) pour un véhicule, ledit pare-chocs arrière (3) comprenant une structure de siège pliable (1), la structure de siège pliable (1) étant mobile entre un mode rangement et un mode assise et faisant partie du pare-chocs arrière (3), la structure de siège pliable comprenant au moins une structure de dossier (6) et au moins une structure d'assise (7), lesquelles structure de dossier (6) et structure d'assise (7) dans le mode assise étant conçues pour être fournies dans une ouverture à bagages (5) d'un compartiment à bagages (4) du véhicule, la structure de dossier (6) et la structure d'assise (7) étant rangées dans un espace interne (8) du pare-chocs arrière (3) du véhicule en mode rangement.

2. Pare-chocs arrière selon la revendication 1, la structure de dossier (6) et la structure d'assise (7) étant rangées en position verticale dans le pare-chocs arrière (3) en mode rangement.

3. Pare-chocs arrière selon la revendication 1 ou 2, la structure de dossier (6) étant positionnée en position verticale et la structure d'assise (7) étant positionnée dans une position sensiblement horizontale en mode assise.

4. Pare-chocs arrière selon l'une quelconque des revendications 1 à 3, la structure de dossier (6) et la structure d'assise (7) en mode déplié et en mode chargement et la structure d'assise (7) en mode assise étant arrêtées au moyen d'une traverse (15).

5. Pare-chocs arrière selon la revendication 4, la structure d'assise (7) en mode assise étant arrêtée au moyen d'au moins une traverse (15), la traverse (15) étant située sur au moins un bord latéral (16) et étant pourvue d'une extrémité sur la structure de dossier (6) et d'une extrémité sur la structure de pare-chocs arrière (3) .

6. Pare-chocs arrière selon l'une quelconque des revendications 1 à 5, la structure de dossier (6) et la structure d'assise (7) étant pourvues de coussins rembourrés (11).

7. Pare-chocs arrière selon l'une quelconque des revendications 1 à 6, la structure de dossier (6) et la structure d'assise (7) étant reliées entre elles de manière pivotante.

8. Pare-chocs arrière selon l'une quelconque des revendications 1 à 7, la structure de siège pliable comprenant une planche de fond (17) de compartiment à bagages, qui est conçue pour faire partie d'un espace à bagages agrandi (18) dans le compartiment à bagages en mode chargement et pour venir en butée contre une surface arrière (19) de la structure de dossier (6) en mode rangement.

9. Pare-chocs arrière selon la revendication 8, la planche de fond (17) de compartiment à bagages étant fixée de manière pivotante à la structure de dossier (6).

10. Pare-chocs arrière selon la revendication 8 ou 9, la planche de fond (17) de compartiment à bagages étant fournie pour arrêter la structure de dossier (6) en mode assise.

11. Véhicule comprenant une extrémité arrière (2), laquelle extrémité arrière (2) comprenant un compartiment à bagages (4), une ouverture à bagages (5) du compartiment à bagages (4) et un pare-chocs arrière (3) selon l'une quelconque des revendications 1 à 10.

12. Véhicule selon la revendication 11, la structure de siège pliable (1) étant fixée à une structure antichoc et/ou de remorquage d'origine du véhicule.

13. Véhicule selon la revendication 11 ou 12, la structure de siège pliable (1) comprenant une planche de fond (17) de compartiment à bagages qui est pourvue d'au moins un bord d'arrêt (20) qui est conçu pour venir en butée contre au moins une surface d'arrêt (21) disposée sur un plancher (23) de compartiment à bagages du véhicule.
